(19) **Europäisches Patentamt** / **European Patent Office** / **Office européen des brevets**

(11) **EP 3 554 232 B1**

(12) **EUROPEAN PATENT SPECIFICATION**

(45) Date of publication and mention of the grant of the patent:
**04.01.2023 Bulletin 2023/01**

(21) Application number: **17800886.8**

(22) Date of filing: **21.11.2017**

(51) International Patent Classification (IPC):
**A01N 25/02** (2006.01)    **A01N 33/12** (2006.01)
**A01N 37/36** (2006.01)    **A01N 37/02** (2006.01)
**A01N 37/04** (2006.01)    **C11D 1/62** (2006.01)
**C11D 3/48** (2006.01)    **C11D 3/20** (2006.01)
**C11D 11/00** (2006.01)    **C11D 3/00** (2006.01)

(52) Cooperative Patent Classification (CPC):
(C-Sets available)
**C11D 3/48; A01N 33/12; A01N 37/36; C11D 1/62;
C11D 3/0015; C11D 3/2086; C11D 11/0017** (Cont.)

(86) International application number:
**PCT/EP2017/079945**

(87) International publication number:
**WO 2018/108466 (21.06.2018 Gazette 2018/25)**

(54) **BIOCIDAL COMPOSITION FOR USE IN A LAUNDRY WASHING PROCESS**

BIOZIDE ZUSAMMENSETZUNG ZUR VERWENDUNG IN EINEM WASCHPROZESS

COMPOSITION BIOCIDE DESTINÉE À ÊTRE UTILISÉE DANS UN PROCÉDÉ DE LAVAGE DE LINGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2016 EP 16203653**

(43) Date of publication of application:
**23.10.2019 Bulletin 2019/43**

(60) Divisional application:
**20187990.5 / 3 756 461**

(73) Proprietors:
• **Unilever IP Holdings B.V.**
**3013 AL Rotterdam (NL)**
Designated Contracting States:
**AL AT BE BG CH CZ DK EE ES FI FR GR HR HU
IS LI LT LU LV MC MK NL NO PL PT RO RS SE SI
SK SM TR**
• **Unilever Global IP Limited**
**Wirral, Merseyside CH62 4ZD (GB)**
Designated Contracting States:
**CY DE GB IE IT MT**

(72) Inventors:
• **METCALFE, Kenneth**
**Bebington**
**Wirral Merseyside CH63 3JW (GB)**
• **CARUS, Mark, Anthony**
**Bebington**
**Wirral Merseyside CH63 3JW (GB)**
• **SMITH, Emily, Grace**
**Bebington**
**Wirral Merseyside CH63 3JW (GB)**
• **STOTT, Ian, Peter**
**Bebington**
**Wirral Merseyside CH63 3JW (GB)**
• **O'KEEFFE, Joanne, Clare**
**Bebington**
**Wirral Merseyside CH63 3JW (GB)**
• **CORNMELL, Robert, Joseph**
**Bebington**
**Wirral Merseyside CH63 3JW (GB)**

(74) Representative: **Newbould, Frazer Anthony et al**
**Unilever N.V.**
**Unilever Patent Group**
**Bronland 14**
**6708 WH Wageningen (GB)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**WO-A1-95/29217**     **WO-A1-96/14375**
**WO-A1-2013/156371**     **WO-A1-2016/040230**
**WO-A2-2009/125305**

(52) Cooperative Patent Classification (CPC): (Cont.)

C-Sets
**A01N 33/12, A01N 25/02, A01N 33/12,
A01N 37/04, A01N 37/36;
A01N 37/36, A01N 25/02, A01N 37/04**

**Description**

TECHNICAL FIELD

This invention relates to a method for biocidal composition to be added to a laundry washing process to treat items being laundered, such as clothes, particularly in a washing machine.

BACKGROUND

As the laundry washing process becomes more energy and water efficient; wash times, wash temperatures and water volumes for rinsing are all being reduced. Also, chemical compositions for use in the process are being reformulated to reduce their environmental impact.

Partly as a result of these changes consumers are increasingly concerned that their clean laundry may still harbour undesirable, opportunistic pathogenic bacteria that the laundry process has not sufficiently removed or killed. They can see that stains have been removed. They can smell that malodours have been overcome or removed, but they find it hard to be sure that any pathogens have also been removed or killed. They want to wash at lower temperatures, to be energy and water efficient and to use less harsh and fewer chemicals in the laundry process, but they worry that they might then increase the risk of pathogens being present on washed items. Coupled with a fear that resistant strains of bacteria are hard to treat if infection occurs, this leads to an unmet consumer need for sufficient hygiene to be delivered; either every wash, or at least whenever it is required by the consumer.

Products exist to provide cleaning of washing machines. They are designed and recommended to be used in the absence of laundry and do not necessarily improve laundry hygiene at point of removal of clothes from the washing machine. In some locations the water supply used for rinsing is heavily contaminated by bacteria and viruses. In that case having a previously disinfected washing machine is almost irrelevant to the hygiene of the resulting wash load. Furthermore products that have passed laboratory kill tests may not be so effective in real life laundry conditions. Occasional cleaning of a washing machine is not sufficient to keep potentially pathogenic bacterial counts to a low level. Furthermore, recent data showed that the levels of bacteria measured on towels placed with consumers fell from $10^7$ to $10^4$ cfu/ $g_{towel}$ when a new washing machine was substituted for an old and frequently used machine. Subsequent data then showed a return to the $10^7$ cfu/$g_{towel}$ after several weeks of machine use

Our research has shown that *Pseudomonas spp.* are a commonly found genus on laundered cotton in both developed and developing countries. Infections of the skin or soft tissues by Pseudomonas spp. tend to be serious and complex because these bacteria are both invasive and toxigenic. These opportunistic pathogens are more likely to cause illness amongst the growing global population of immunocompromised people. *Pseudomonas aeruginosa* (*P. aeruginosa*) is a Gram-negative bacterium that is commonly found in the environment e.g. soil, water and other moist locations. P. *aeruginosa* is an opportunistic pathogen. It takes advantage of an individual's weakened immune system to create an infection. This organism produces tissue-damaging toxins and can cause urinary tract infections, respiratory system infections, dermatitis, soft tissue infections, bacteremia, bone and joint infections, gastrointestinal infections and a variety of systemic infections, particularly in patients with severe burns and in cancer and AIDS patients who are immunosuppressed. This bacterium is of particular concern to individuals with cystic fibrosis, who are highly susceptible to pseudomonal lung infections. The case fatality rate for such individuals infected with P. *aeruginosa* approaches 50%. It can also cause ear infections in more healthy individuals.

It is normal to test efficacy of a biocide system against a range of organisms. Low temperature laundry additives would normally be tested following BS EN 1276: 1997 against both Gram-negative and Gram-positive bacteria using all, of the following organisms:

*Staphylococcus aureus (S. aureus )* ATCC 6538
*Pseudomonas aeruginosa* (*P. aeruginosa* ) ATCC 15442
*Enterococcus hirae (E. hirae)* (ATCC 10541
*Escherichia coli (E. coli )* ATCC 10536

Based on our own analysis of commonly found bacteria in laundry we believe that action against *Pseudomonas* spp. such as P. *aeruginosa* is very important.

The high dilution factors experienced when using laundry products and the fact that microbial recontamination can occur at all stages e.g. via introduction of contaminated water in each step of a wash process means that adding the biocide in the final rinse cycle could be useful. However, to be effective this point of delivery would require a fast acting, weight-efficient antimicrobial system that works at ambient temperatures, normal rinse concentrations and timescales commensurate with rinse times. These time scales can be as short as 5 minutes in modern automatic washing machines.

Laundry hygiene products can be classified into two main classes. Those containing bleach and those containing other biocides. A major drawback with the otherwise excellent bleach based products is that they may also bleach any coloured fabrics. Also, they are typically powder based and consumers prefer a liquid additive to fit with the liquid laundry detergent and/or liquid fabric conditioner they use.

One on-market liquid product containing non-bleach biocides is said to contain dimethyl didecyl ammonium chloride (DDAC) & alkyl dimethyl benzalkonium chloride (ADBAC). The recommended dose of 120g delivered via the rinse conditioner drawer would deliver 2.88g of the 60: 40 DDAC: ADBAC mixed quaternary ammonium salt biocide system. We have determined that its performance against P. *aeruginosa* in a suspension test with 5 minutes contact time at 20°C and under "dirty" conditions as defined by the EN1276 protocol is insufficient to give claimable hygiene and even under "clean" conditions, sometimes argued to represent the state of clothes entering the final rinse, it does not always deliver the log 5 reduction required for claim support. In some machines, the high dose (2 × 60mL capfuls) can fully utilise the rinse conditioner compartment leaving no room for a fabric conditioner to be added.

WO2009/125305A2 (ECOLAB INC.) discloses an aqueous sanitary cleaning composition comprising: a) a hydroxycarboxylic acid in an amount up to 12 wt %, b) a benzalkonium chloride, and c) water, wherein the weight ratio of the hydroxycarboxylic acid to the benzalkonium chloride is between about 5:1 and 1:1 and the composition is effective in reducing the colony forming units of microorganisms by at least 3 logarithm when contacted with the sanitary cleaning composition for five minutes at 20 degrees C. Such cleaning composition can be used for cleaning of, disinfecting of, and/or lime removal from surfaces made of brass, copper, aluminium, stainless steel, zinc, polyvinylchloride (PVC), polypropylene, acrylonitrile butadiene styrene (ABS), polyacetate, polystyrene, polyethylene, polymethyl methacrylate (PMMA, Plexiglas), polycarbonate, ceramic, tiles, porcelain, painted and plastic coated surfaces and enamel or any other surfaces which can be found in, for example, sanitary or kitchen areas.

WO2016/040230A1(LONZA.INC.), discloses a disinfectant composition comprising a biocidal quaternary ammonium compound, hydrogen peroxide, and at least one acid or a salt thereof. Particularly, a composition comprising a biocidal quaternary ammonium chloride compound, hydrogen peroxide, and C1 to C8 carboxylic acid, mono-, di- and tricarboxylic acid enhances significantly its antimicrobial activities of either hydrogen peroxide or the quaternary ammonium chloride alone.

WO2013/156371 (Unilever) discloses an aqueous fabric conditioner composition comprising from 0.5 to 35 wt%, of a fabric softening active, wherein the fabric softening active comprises an ester-linked triethanolamine quaternary ammonium compound and from 0.001 % to 2 wt%, of a non-ionic, antimicrobial, and from 0.01 to 10 wt% perfume. The selected nonionic antimicrobial gives a composition stability advantage over other antimicrobials tested and shows synergistic in-wear antimicrobial activity in combination with the ester linked triethanolamine quaternary ammonium compound in the fabric conditioner. The document also discloses that in addition to the non-ionic antimicrobial other antimicrobial agents may also be present, provided that these are not present at a level which causes instability in the formulation. Among such useful further antimicrobial agents are chelating agents, which are particularly useful in reducing the resistance of Gram-negative microbes in hard water. Acid biocides may also be present.

Boomsma et al., SOFW Journal (2015) Vol 141(10) p2 to 6 discloses that in the absence of surfactants, Lactic Acid is especially effective against Gram-negative bacteria and that Gram-positive bacteria can be tackled with combinations of Lactic Acid and surfactants.

This synergy gives the combination of surfactants and Lactic Acid a broad spectrum antimicrobial activity in cleaning products. In products with relatively low surfactant levels the synergy with Lactic Acid is not only functional, but also economical. Prime examples of such synergy are said to be antibacterial hard surface cleaning formulations, where low levels of anionic surfactants and Lactic Acid can make for very cost effective antibacterial and antiviral efficacy. The publication also discloses that for more sensitive formulations ultra-pure grades of L-Lactic Acid are available that enable formulations to rely on Lactic Acid for antimicrobial claims or preservation, while promoting the fact that they are fragrance-free. The article also notes that other secondary ingredients like preservatives, chelating agents and alcohols, can boost the bactericidal action of Lactic Acid.

A Jungbunzlauer publication entitled "safe and efficient bacterial disinfection with bio-based Lactic Acid" mentions its possible use in laundry detergents. The disclosure reports that a mixture of the Lactic Acid and SLES was tested for synergy for 5 mins (ended by dilution neutralisation) at 20 °C against P. *aeruginosa* (DSM939), S. *aureus* (ATCC 6538), E. *coli* (ATCC 10536) and E. *hirae* (ATCC 10541) looking for a 99.999% or log 5 reduction following a modified DIN EN 1040 protocol. They found a pronounced synergy between the two components over a broad range of concentrations. They say that the surfactant helps the Lactic Acid to overcome and penetrate the bacterial cell walls. As a consequence, the Lactic Acid can fulfil its entire biocidal potential and the cell perishes subsequently. They conclude that while single substances (Lactic Acid, surfactant) only provide anti-bacterial action to a limited extent, the combination of both results in a drastic enhancement of the biocidal performance. Due to this favourable synergy, comprehensive disinfection claims (reducing 99.999% of all bacteria - log 5 reduction) are supported even at Lactic Acid concentrations down to 1% and below. This, in turn, means that end formulations may be developed bearing less strict labelling.

The following patent publications suggest combination of at least one quaternary ammonium compound with Lactic Acid:

WO 2001/00777 (Colgate) discloses surface disinfecting compositions containing a mixture of disinfecting agents, a booster agent for the disinfecting agents an anionic surfactant and a hydrocarbon ingredient, a water soluble cosurfactant and water.

The disinfecting agent is used at a level of 0.05 to 10 wt%. The booster agent is selected from chelants including organic acids such as Lactic Acid or citric acid and is used at a level of from 0 to 6 wt%. The examples all use 2.5 wt% of Bardac 2170 (DDAC) and from 0 to 2 wt% of Lactic Acid or citric acid. Bardac 114 is taught as an alternative mixture of quaternary ammonium compound biocides. Thus both the general teaching and the examples point to the use of an excess of quaternary ammonium compound biocide over Lactic Acid. The booster agent is taught to improve the bacterial activity of the disinfecting agent thereby increasing the bacterial kill.

WO 2001/81519 (Colgate) discloses a toilet bowl cleaner which contains nonionic surfactant, a disinfecting agent, a polymeric viscosity modifier and water. The disinfecting agent is present at a level of from 0.05 to 2.5 wt% and is selected from various quaternary ammonium compounds including Bardac 114. The composition may optionally further include from 0 to 2.5 wt % of a proton donating agent selected from a long list of organic acids, including Lactic Acid. These are not used in the one example.

US 3932655 (Int. Pharmakon) discloses a disinfecting concentrate that includes a mixture of n-alkylated benzalkonium halides, preferably, n-alkylated benzyl ammonium chlorides or benzalkonium chlorides, each having from C8-18 in their respective alkyl portions, preferably C12-18, and mixtures thereof. The concentrate further includes a preservative and water. Use solutions prepared from the concentrate contain minor amounts thereof in order to be efficacious. Preferably, the concentrate consists of 99.5 to 99.9 wt% inert ingredients and 0.1 to 0.5 wt% active ingredient consisting of a mixture of: a chelating agent and a mixture of n-alkylated benzyl alkyl ammonium halides or n-alkylated benzyl alkyl ammonium halides or n-alkyl benzalkonium halides. The chelating agent is preferably either ethylenediamine tetraacetic acid or the alkali metal salts thereof such as disodium ethylene diamine tetraacetic acid. Other useful compounds include the sugar acids or alkali metal salts thereof, such as, gluconic acid, Lactic Acid, citric acid, sodium or potassium gluconate, lactate, citrate and the like.

The active ingredient contains from about 50 to 75 wt% of the mixture of quaternary ammonium chlorides and from about 25 to 50 wt% of chelating agent. Preferably, the active ingredient contains from about 50 to 60 wt% of the mixture of quaternary ammonium chlorides and from about 40 to 50 wt% of chelating agent. There is one disinfecting composition example: it used the preferred disodium salt of ethylene diamine tetraacetic acid as the chelating agent and two main types of quaternary ammonium disinfecting agents (ADBAC and ADEBAC). The weight ratio of these quaternary ammonium compounds to chelating agent in the active ingredient represents an excess of quaternary ammonium compounds over chelating agent of 0.125: 0.090.

US 5861371 (Henkel-Ecolab) discloses an aqueous composition for the post-treatment of washed laundry containing 0.1 to 30 wt% of a water insoluble quaternary ammonium compound, 0.1 to 50 wt% of a water-soluble quaternary ammonium compound, 0 to 5 wt% of a terpene compound, 0.1 to 20 wt% of a water-soluble acid, and 0.1 to 20 wt% of an emulsifier. The composition is for improving fabric hygiene and deodorizing properties. The addition of the terpene provides this benefit without using destabilising amounts of water soluble quaternary ammonium compound biocides. The addition of the water soluble acid appears to be intended to adjust the pH of the composition to lie in the range 1 to 5. Acidic compositions are said to neutralise alkaline detergent residues on fabrics. The examples used formic acid, although other water soluble acids including Lactic Acid are also disclosed as suitable alternatives. With the exception of the examples formulated at pH 1 all the examples used an excess of quaternary ammonium compound over the formic acid. Claim 7, which can be considered to be a preferred composition range, excludes all the pH 1 examples from its scope. The examples all use DDAC. Although claims generically cover ADBAC it is not used.

WO 2010/027863 (Stepan) discloses a biocidal composition containing a biocidal agent and a potentiator system, the mixture having synergistic biocidal activity. A synergy index is defined in paragraph 048. The biocidal agent comprises at least one quaternary ammonium compound and the potentiator system comprises at least one surfactant, solvent, chelating agent and /or buffering agent. Chelating agents are said to be particularly suited for dilutable biocidal compositions where the diluent can have a high mineral content. Lactic Acid is not mentioned as a suitable chelating agent. It is mentioned as a suitable buffering agent. The buffering agent is taught at a level of 0 to 6 wt%, down to 0.3 to 0.5 wt%, whereas the quaternary ammonium compound active level taught is 6 to 25 wt% down to 10 to 12 wt%. Thus, an excess of quaternary ammonium compound over a buffering agent such as Lactic Acid is disclosed. This is also reflected in the examples.

EP 1454638 (Bode Chemie) discloses concentrated disinfecting compositions based on quaternary ammonium compounds and their use for chemical-thermal care for instruments. Examples 1 and 3 use Lactic Acid and 2 types of QAC. There is an excess of total QAC over Lactic Acid.

WO 2013/067150 (Univ Columbia) describes compositions with sustained antimicrobial activity comprising one or more cationic antimicrobial agent and an optional organic acid and or zinc salt as an anti-irritant. The amount of QAC appears to exceed that of the organic acid.

WO 2013/098547 (Byotrol) discloses antimicrobial compositions comprising at least one antimicrobial quaternary ammonium compound, a hydrophilic polymer, a polar solvent, at least one nonionic surfactant and a chelate. The invention resides in the particular type of polymer chosen. The examples all have a large excess of quaternary ammonium compound over chelate / Lactic Acid.

SUMMARY OF THE INVENTION

According to the present invention there is provided a method for adding a biocidal composition to a laundry washing process comprising the steps of adding a dose of from 4 to 40ml of a liquid composition to the rinse aid dispenser of an automatic washing machine, optionally together with a dose of liquid fabric conditioner in the same dispensing compartment, the composition comprising one or more water soluble quaternary ammonium compounds and one or more water soluble organic hydroxy acids; wherein the weight ratio of the water soluble organic hydroxy acids to the quaternary ammonium compounds lies in the range from 95:5 to 52:48; wherein the acid in the composition comprises L-Lactic Acid; and wherein there are two water soluble quaternary ammonium compounds in the composition, one being ADEBAC C12-14 alkyl [(ethylphenyl) methyl] dimethyl ammonium chloride), and the other ADBAC (benzyl C12-16 alkyl dimethyl ammonium chloride).

The weight ratio of water soluble organic hydroxy acids to water soluble quaternary ammonium compounds preferably lies in the range 75:25 to 54:46.

The water soluble organic hydroxy acids comprises L-Lactic Acid.

There are two water soluble quaternary ammonium compounds in the composition, one being ADEBAC and the other ADBAC. The composition may further comprise DDAC. The biocidal composition may comprise a carrier solvent and a mixture of:

(i) three quaternary ammonium compounds consisting of:

a) (ADBAC) Benzyl C12-C16 alkyl dimethyl ammonium chloride ,
b) (DDAC) didecyldimethyl ammonium chloride, and
c) (ADEBAC) C12-14-alkyl [(ethylphenyl) methyl] dimethyl ammonium chloride , and

(ii) L-Lactic Acid,

wherein the weight ratio of L-Lactic Acid (ii) to quaternary ammonium compounds (i) lies in the range from 95:5 to 52:48.

The dose is preferably from 5 to 25 ml.

Preferably the composition is formulated as a liquid.

Use of this mixture with an excess of Lactic Acid goes against the teaching of the prior art yet seems to provide an excellent level of performance against P. *aeruginosa.* The high performance enables a considerable reduction of the total volume of biocide used with a synergistic increase in microbiocidal activity. For example, a 10 g dose of the concentrate can be enough to add to the laundry under clean (rinse) conditions with an expectation of delivery of claimable hygiene on the P. *aeruginosa* bacterium known to be present in the laundry context. Reduction of volume to this low a level gives the option to add the mixture to a fabric conditioner compartment of an automatic washing machine as well as adding the normal dose of fabric conditioner. Adding the biocide to the rinse in this way is preferable to adding it to the initial wash liquor because (i) of incompatibility with anionic surfactant containing main wash products and (ii) fresh microbes may be introduced with the rinse water and they too will need to be treated with biocide to ensure hygiene of the washed and rinsed laundry items.

Providing the mixed biocide system as a separate concentrate for addition to the laundry process, preferably during the rinse phase, can also avoid the issue of the quaternary ammonium compound biocides destabilising the fabric conditioner if they are formulated together with the fabric conditioner and stored in contact in a bottle for extended periods.

Use of compositions according to the invention provides hygienically clean clothes with greatly reduced bacterial loading, especially reduced loading of P. *aeruginosa.* Use of the compositions can further provide improved clothes freshness and fewer incidences of residual malodour on clothes and from machines themselves. Use of the compositions can also reduce the incidence of black mould often seen in fabric-conditioner drawers of automatic washing machines.

The composition is suitably formulated at a pH greater than 2, preferably at a pH of 2.2 or higher. This improves the safety of the formulation for consumers. In use the compositions will normally be diluted and the pH will rise to something nearer to neutral. Generally, a more acid composition will kill more bacteria.

DETAILED DESCRIPTION OF THE INVENTION

Many consumers use a fabric conditioner in the final rinse of a laundry washing process to deliver benefits, such as fabric softening and longer lasting fragrance. The present invention allows for delivery of an effective antimicrobial mix via a concentrated composition that may either be provided in single- or multi-dose form. It is effective when used alone and it is also effective when combined with fabric conditioner. This allows consumer flexibility to dose the composition together with a fabric-conditioner via the rinse compartment of an automatic washing machine or to use it as a standalone rinse treatment.

Alternatively, but less preferred due to stability concerns, the technology can be formulated into a fabric conditioner composition to provide an additional benefit from such a combined product.

Smart in-wash delivery devices may be configured to enable sequential release of benefit agents; the concentrated antimicrobial compositions of this invention may be conveniently released, especially into the rinse, from such a device.

Although the compositions of this invention are primarily intended for delivery in the rinse; they could alternatively be adapted to deliver antimicrobial action to any step of the wash cycle including pre-wash, main wash, soak, steam, UV-irradiated or any rinse step. The invention is not restricted to machine washing and will also provide a hygiene benefit when used in a hand wash laundry process.

The compositions are designed to be sufficiently concentrated to provide the required level of hygiene when 4 to 40 ml, preferably 5 to 25 ml, of the composition is delivered to the rinse cycle of an automatic washing machine. L-Lactic Acid alone fails to kill sufficient bacteria to pass the EN1276 regulatory test when delivered as a 10 ml dose. Indeed even at 100 ml dose it still gives inadequate kill when used on its own.

The Organic Hydroxy Acid

L-Lactic Acid is an organic acid and shares several features with similar sized acids. The combination of low acid dissociation constant (pKa) and low hydrophobicity makes it readily miscible with water. L-Lactic Acid resides primarily in the water phase of an emulsion. This gives it an advantage over more hydrophobic organic acids, because the water phase is where bacteria also reside. It is particularly good at "shuttling" protons, or acidity, across cell membranes. Once inside the cell, there are four broad-acting mechanisms that inhibit the bacterial cell. These four mechanisms were reviewed by Desriac and coworkers in 2013:

- Acid stress disrupts cell regulation on a general level.
- Bacteria spend energy to maintain pH, by pumping out acid.
- Bacteria change their metabolism to produce alkaline metabolites.
- Acid stress generates free radicals that damage all cellular mechanisms.

During short exposures that lead directly to inactivation of bacteria, some of these mechanisms are more relevant than others. In standardised testing of the antimicrobial quality of cleaning products, exposures can be as brief as 30 seconds. In this time frame, bacteria cannot respond by adapting their structure or their metabolism for survival. The sudden severe acid stress leads to an unmitigated shock of oxidative stress, while any survival mechanisms are suppressed by the low intracellular pH. In this respect, Lactic Acid is very different from some synthetic antimicrobials that can rely on singular mechanisms to kill bacteria. No single adaptation could render a bacterium resistant. The generation of the oxidative stress occurs at the cell membrane, due to the malfunctioning of the Electron Transport Chain. When exposed to cleaning products, the bacterial membranes are already destabilised. They are rendered more fluid by the presence of surfactants to result in a more effective inactivation. Lactic Acid is effective against Gram-negative bacteria in the absence of surfactants. Gram-positive bacteria are generally less sensitive to Lactic Acid. Secondary ingredients like preservatives, chelating agents and alcohols, can boost the bactericidal action of Lactic Acid. These synergies are generally best understood as adding additional sabotage to the life processes of microbes, rendering them more vulnerable to the action of the main antimicrobial of the formulation.

Lu et al., J. Food Protection (2011) Vol 74(6) p893 to 8 discloses only a small difference in *E. coli* reduction between L- and D-Lactic Acid under anaerobic conditions, but refers to earlier work in aerobic environments where L-Lactic Acid gives significantly better results. As the laundry operation carried out under agitation in a washing machine is primarily an aerobic process we believed that the L-Lactic Acid would be preferred for that use.

Other carboxylic acids can be used, either alone or in mixtures which each other or with Lactic Acid. One useful mixture is a 50:50 wt% mix of citric and malonic acids. Acids that are in liquid form (e.g. Lactic Acid) and that can therefore easily be mixed with the quaternary ammonium compounds that are also in liquid form are preferred for processing reasons. L-Lactic Acid is preferred over the racemic mixture because it is a registered biocide and can therefore be more readily used to support a claim to biocidal activity.

The quaternary ammonium compound biocide(s)

Exemplary quaternary ammonium compound (QAC) biocides and biocide mixtures suitable for use in the invention are given in Table 1:

Table 1

| Material name | Supplier | Active level | Active substances |
|---|---|---|---|
| Bardac 114 | Lonza | 0.48 | ADEBAC : ADBAC : DDAC |
| BTC 2125 M80E | Stepan | 0.81 | ADEBAC : ADBAC |
| BTC 8358F | Stepan | 0.81 | ADBAC |
| BTC 1010-E | Stepan | 0.5 | DDAC |
| Sanilac 80* | Corbion | 0.8 | L-Lactic Acid |
| Tinosan HP100 | BASF | 0.3 | Diclosan |
| Citric acid | Sigma Aldrich | 1.0 | Citric Acid |
| Malonic acid | Sigma Aldrich | 1.0 | Malonic Acid |

*Purac® Sanilac (L-Lactic Acid) is being registered as a biocide by Corbion.
ADEBAC = C12-14-alkyl [(ethylphenyl) methyl] dimethyl ammonium chlorides CAS No 85409-23-0
ADBAC = Benzyl C12-16 alkyl dimethyl ammonium chlorides CAS No. 68424-85-1
DDAC = Didecyldimethylammonium chloride CAS No 7173-51-5
L-Lactic Acid = 2-hydroxypropanoic acid ($C_3H_6O_3$)

A preferred material is Bardac 114 which comprises three antimicrobial quaternary ammonium compounds (QACs) in equal measure (ADEBAC, ADBAC & DDAC) in propan-2-ol (7%) and water. This is marketed as a synergistic mixture and is said to be about 3 times more efficient than ADBAC (i.e. BKC). The active content of Bardac 114 is: ADBAC: QAC benzyl C12-16 alkyl dimethyl ammonium chlorides (16%)

DDAC: Didecyldimethylammonium chloride (16%)
ADEBAC: QAC C12-14-alkyl [(ethylphenyl) methyl] dimethyl ammonium chlorides (16%)

The mixed biocide system

We have found that combining L-Lactic Acid with Bardac 114 gives good biocidal activity against P. *aeruginosa* at ambient temperature and short contact times and also reduces the amount of Bardac 114 needed to secure EN1276 pass for rinses from a front loading automatic washing machine (Dilution factor x1400)); and also avoid flammable labelling on product. We also tested racemic Lactic Acid and found it gave similar results when mixed with Bardac 114.
EN1276 usually requires testing against 4 species of bacteria. They are:

S. *aureus:* a Gram-positive bacterium
E. *hirae:* a second Gram-positive bacterium
E. *coli:* a Gram-negative bacterium
P. *aeruginosa:* a second Gram-negative bacterium.

One of the species used in the EN1276 challenge test is P. *aeruginosa* and the concentrated composition is very effective against this. We have established that *Pseudomonas* spp. is a major contributor to the microbiome associated with laundered clothes in many markets. For QAC based systems it is known that P. *aeruginosa* is the most difficult of the species to kill in the EN 1276 test.

Additional biocides

Diclosan, a bi-halogenated compound; 4-4' dichloro-2-hydroxy diphenyl ether may be added to the composition in some embodiments to provide weight efficient biocidal mixtures.
The viscosity, colour, smell and pH of the compositions may be adjusted by the addition of thickeners, colorants, fragrances, and pH modifiers.

Suitable thickeners include: gellan gum, diutan gum, xanthan gum, guar gum, acrylate/acrylic copolymers, acrylate/aminoacrylate copolymers, alginate, arabinogalactan, carrageenan, pectin, water swellable clays, fumed silicas, compatible non-ionics and glycerol in combination with any of the aforementioned materials.

Suitable pH modifiers should be cheap, odourless, non-toxic and produce clear solutions upon modification of the pH. They include: Sodium Hydroxide, Potassium Hydroxide, Calcium Hydroxide and Lithium Hydroxide.

When they are supplied as concentrates the compositions may either be packed as single doses, or in a package capable of delivering multiple doses. Suitable packs that assist with the measurement of doses as low as 10 ml are familiar to the person skilled in the art.

The invention will now be further described with reference to the following non-limiting examples and to the drawing; which is a plot of synergy gain versus biocidal composition showing where the gain for a 3 component system is greater than 2.6.

## EXAMPLES

Synergy

Equation 1 calculates the synergy of a three-component mixture of antimicrobial ingredients (Sabc)

$$S_{abc} = \frac{[a]_{MBCabc}}{MBC\ a} + \frac{[b]_{MBCabc}}{MBC\ b} + \frac{[c]_{MBCabc}}{MBC\ c} \qquad \text{Equation 1}$$

Where:

$MBC_a$ is the minimum biocidal concentration of the ingredient a determined against a specified organism. (Defined as the concentration of ingredient a delivering a Log 5 reduction of microbial number with respect to the appropriate suspension test protocol and in this case for a 5 min contact time, dirty conditions, water of standard hardness at 20°C). The examples herein are generated in accordance to the MTP suspension test that is a scaled down version of EN1276.

$[\alpha]_{MBCabc}$ is the concentration of ingredient a in a mixture abc at the MBC of the mixture i.e. at MBCabc.

For each type of bacterium tested a separate synergy, ($S_{abc}$) is calculated.

$S_{abc}$ of a mixture against that bacterium is synergistic when < 1, additive when = 1 and antagonistic when > 1.

The synergy gain of the mixture is defined as $\frac{1}{Sabc}$ and is therefore synergistic when > 1.

For a two component biocidal mixture the equation becomes:

$$S_{ab} = \frac{[a]_{MBCab}}{MBC\ a} + \frac{[b]_{MBCab}}{MBC\ b} \qquad \text{- Equation 2}$$

## Example 1

The compositions were made by blending raw materials using a simple overhead mixer to form the compositions in Table 2. No order of addition issues were encountered.

### Table 2

| Example Code | | A | B | C | D | E | F | G | H |
|---|---|---|---|---|---|---|---|---|---|
| Ingredient | Activity | % as is | | | | | | | |
| Bardac 114 (QAC mix) | 0.48 | 75.0 | | 56.3 | 41.3 | 37.5 | | | |
| Sanilac 80 (L-Lactic Acid | 0.8 | | 46.9 | 11.7 | 21.1 | 23.4 | | 11.8 | 23.5 |
| BTC 1010-E | 0.5 | | | | | | 75.0 | 56.2 | 37.5 |
| 1 M HCl | | Add sufficient 1M HCl or 1 M NaOH as appropriate to adjust pH to 2.2 | | | | | | | |
| 1 M NaOH | | | | | | | | | |
| H₂O | 1.0 | To 100% | | | | | | | |

### Table 2 (cont)

| Example Code | | J | K | L | M | 1 | 2 | 3 | 4 | 5 |
|---|---|---|---|---|---|---|---|---|---|---|
| Ingredient | Activity | % as is | | | | | | | | |
| Bardac 114 (QAC mix) | 0.48 | | | | | 35.0 | 18.8 | | | 37.5 |
| Sanilac 80 (L-Lactic Acid | 0.8 | | 11.8 | 23.5 | | 25.0 | 35.2 | 35.2 | 35.2 | |
| BTC 1010-E | 0.5 | | | | | | | 19.0 | | |
| BTC 2125 M80E | 0.81 | 46.0 | 37.4 | 23.2 | | | | | 11.6 | |
| Citric Acid: Malonic Acid 1:1 | 1.0 | | | | 70 | | | | | 23.4 |
| 1 M HCl | | Add sufficient 1M HCl or 1 M NaOH as appropriate to adjust pH to 2.2 | | | | | | | | |
| 1 M NaOH | | | | | | | | | | |
| H₂O | 1.0 | To 100% | | | | | | | | |

The fractional compositions of actives i.e. the QACs (ADBAC; ADEBAC; DDAC) and organic acids present in these mixtures are given in the Tables 4 and 5.

### Test Protocols

A high throughput quantitative suspension test conducted in micro titre plates (MTP) and based upon a scaled down version of the classical suspension testing encompassed in BS EN 1276: 1997 is used for evaluating the bactericidal activity of the mixed biocide systems. The approach can be used with any bacterium but in this example the bacterial strain P. *aeruginosa* ATCC 15442 is used exclusively.

The scaled down version of the full EN 1276 assay is carried out using a Hamilton robotics automated liquid handling system with a 96-well head. The practical differences between the two protocols as summarised in Table 3.

**Table 3: Comparison of BS EN 1276 and the scaled down MTP method**

| BS EN 1276 Classical Suspension Test | Scaled Down 96-well MTP EN 1276 MTP Suspension test |
|---|---|
| 1 ml test bacteria into 1 ml interfering substance (0.3/0.0 3g/L bovine serum albumin) in a 30 ml sterilin. | 100 µl test bacteria into 100 µl interfering substance (0.3g/L bovine serum albumin) in a 96-well MTP. |
| 2 minute contact time | 2 minute contact time |
| 8 ml of test product added to bacteria/BSA | 60 µl bacteria/BSA added to 240 µl test product in a 96-well MTP. Within the columns of this MTP the concentration of the test product is varied. Thus the bacteria are subjected to varying challenge. |
| 5 minute contact time | 5 minute contact time |
| 1 ml into 9 ml of neutralizing solution | 30 µl into 270 µl of neutralizing solution |
| 5 minute neutralization period | 5 minute neutralization period |
| 1:10 serial dilutions into tryptone diluent | From the neutralising plate 30µl from each well is transferred into first of six dilution plates from here 1:10 serial dilutions of 30 µl into 270 µl of tryptic soy broth are made. A span of 6 Logs in bacterial population is thus compared to the bacterial growth control wells. |
| 1 ml into a petri dish and overlaid with molten agar ~40°C | Initial optical density read at 620 nm across all dilution plates. |
| Swirl, set and incubate plate for up to 40 hours checking at 24. | A 20 hour incubation period at 37°C is undertaken. |
| Surviving bacterial number determined via total viable count number. | End point optical density read at 620 nm A change of 0.2 OD units with respect to the initial reading is used to set the growth threshold. The concentration prior to the one at which this threshold is passed indicates the Most Probable Number of bacteria that a given concentration of the biocidal mixture can kill at each dilution. |

In the MTP suspension test the following reagents are used:-

| | |
|---|---|
| Neutralizer: | Tween 80, 60 g/L; lecithin, 6 g/L; L-histidine, 2 g/L; sodium thiosulphate, 10 g/L; sterilised by autoclaving. |
| Recover media: | Tryptone Soya Broth 30 g/L sterilised by autoclaving. |
| Bacterial suspension media: | Bacteriological Tryptone Powder, 1 g/L; sodium chloride 8.5 g/L sterilised by autoclaving. |
| **Bacterial strain used:** | *Pseudomonas aeruginosa* ATCC 15442 |
| **Contact Time:** | 5 minutes ± 10 seconds |
| **Test Temperature:** | 20°C ± 1°C |
| **Interfering Substance:** | Dirty conditions: 0.3% w/v bovine serum albumin in test |

Interfering substance prepared in sterile distilled water at 3% and filter sterilised by passing through a 0.2 µm cellulose filter unit.

**Temperature and duration of incubation:** 37°C ± 1°C for 20 hour duration

Stock concentrations of formulations given in Table 1 were prepared in 60 ml sterilins and dilutions prepared in a 96-well deep well plates, all stocks and dilutions were prepared using hard water of 24°FH. Typically, the testing approach was such that the overall total span of concentrations of ingredient-mixtures varied between 1000 ppm and 50 ppm. Test plates were set up such that formulation plates had 11 formulation dilutions spanning the 11 columns of the plate. For less biocidal systems such as compositional Example B and M it was necessary to increase the concentration and use larger dilution steps to search for and ultimately find the MBC.

Bacterial suspensions were prepared from fresh plate cultures on tryptone soya agar and incubated for 18 hours at 37°C. Suspensions were made up to a density of 1.7 McFarland units (1 to 1.5 × $10^8$ cfu/ml) in tryptone diluent.

Formulations were prepared as detailed above and diluted in a 2.2 ml deep well plate using water of 24°FH for all dilutions. Concentrations were made to allow for a 1.25 in test dilution. Positive and negative controls of 1% Virkon solution and water of 24°FH were used.

Upon transfer of the formulations into the test plate, 100μl of interfering soil and 100 μl of bacterial suspension were transferred into an empty 96-well MTP mixed and left for a contact time of 2 minutes. A 60 μl volume of soil/bacteria was then transferred into the test plate mixed and left for a contact time of 5 minutes. From the test plate 30 μl was aspirated from all wells and dispensed into the neutralising plate leaving for a contact time of 5 minutes. From the neutralising plate 30 μl from all wells was transferred into the first of 6 dilution plates from here 1:10 serial dilutions of 30 μl across all wells were made into the remaining 6 dilution plates containing 270 μl tryptic soy broth.

Plates were read for optical density at 620nm at time 0 the plates were then incubated static at 37°C for 20 hours before taking an endpoint optical density read at 620nm. The OD values after 0 and 20 hours were used to calculate a $\Delta$OD value for each formulation and concentration. Log reductions were determined using most probable number (MPN) with an optical density threshold of 0.2 OD units indicating re-growth. The concentration prior to the one at which this threshold is passed indicates the MPN of bacteria that a given concentration of the biocidal mixture and can kill at each Log dilution.

Having established the dose response of the biocidal mixture a curve fitting approach is adopted to predict the MBC of the biocidal mixture.

The curve fit to get the boundary of this area was created by fitting the data for the measured Log Kill against P. *aeruginosa* vs concentration of the composition to a sigmoidal function of the form:

$$y = a1 + (a2 - a1) / \{1 + 10^{\wedge}[a4*(a3 - X)]\}. \qquad [eq1]$$

Where:

y = measured Log Kill against P. *aeruginosa*
x = concentration of composition in ppm
a1 = minimum Log Kill,
a2 = maximum Log Kill
a3 = the point of inflection of the sigmoidal curve, in ppm
a4 is related to the steepness of the curve at the point of inflection.

For all compositions tested the extent of kill ranged between 0 and 6 Logs hence, a1 was set to 0 and a2 set to 6. The experimental data for a tested composition was fitted to the sigmoid function to obtain parameters a3 and a4. This was achieved by minimising the error obtained from

$$error = sum( (y\_measured(i) - y(i) )^{\wedge}2 ) \qquad [eq2]$$

Where y_measured (i) is the measured MBC of the ith experimental point for a composition and y(i) is the MBC for the ith experimental point for a composition, as calculated by the sigmoidal function; eq1.

The error is obtained by summing up the sum of the squares of the errors over all experimental data points for a composition.

The minimisation of the error by varying the values of a3 and a4 can be obtained by any suitable optimisation strategy, e.g. using the "solver" within excel.

Once values for a3 and a4 were obtained by minimising the error from eq2, the MBC was found by finding the composition concentration that gave a predicted log Kill = 5.

For example, the MBC can be found from:

$$MBC = a3-(1/a4)*LOG10((a2-a1)/(5-a1) -1 )$$

Where LOG10 (x) is the logarithm of x in base 10.

The resulting MBC and calculated synergy gains for each combination are given in Table 4. Examples denoted with a letter are comparative examples falling outside the scope of the claim. Examples numbered 1 to 4 are all according to the invention.

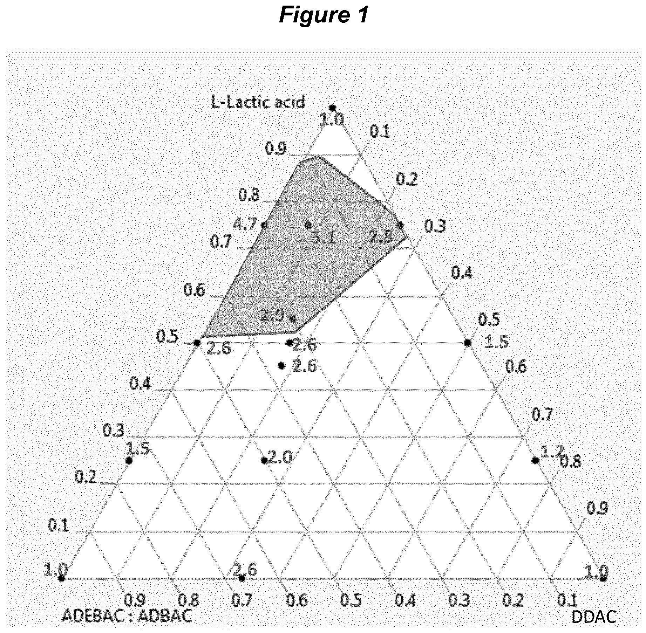

Figure 1 is a plot of the data in Table 4 showing the composition area according to the invention, where the synergy gain is greater than or equal to 2.7. 2.6 being the synergy gain for a mixture of 50 wt% L-Lactic Acid, 25 wt% ADEBAC and 25% ADBAC. 2.6 is the synergy gain obtained when 67% ADEBAC: ADBAC is blended with 33% DDAC to create a mixture equivalent in QAC composition to the synergistic Bardac 114 blend.

**Table 4**

| Example | DDAC | ADEBAC: ADBAC* | L-Lactic Acid | High soil P. *aeruginosa* 5 mins, 20°C MBC (ppm) | Synergy gain (3 way) |
|---|---|---|---|---|---|
| A | 0.33 | 0.67 | 0.00 | 155 | 2.6 |
| B | 0.00 | 0.00 | 1.00 | 300 000 | 1.0 |
| C | 0.25 | 0.50 | 0.25 | 269 | 2.0 |
| D | 0.18 | 0.37 | 0.45 | 288 | 2.6 |
| E | 0.17 | 0.33 | 0.50 | 315 | 2.6 |
| 1 | 0.15 | 0.30 | 0.55 | 327 | 2.9 |
| 2 | 0.08 | 0.17 | 0.75 | 326 | 5.1 |
| F | 1.00 | 0.00 | 0.00 | 248 | 1.0 |
| G | 0.75 | 0.00 | 0.25 | 281 | 1.2 |
| H | 0.50 | 0.00 | 0.50 | 326 | 1.5 |
| 3 | 0.25 | 0.00 | 0.75 | 356 | 2.8 |
| J | 0.00 | 1.00 | 0.00 | 581 | 1.0 |
| K | 0.00 | 0.75 | 0.25 | 532 | 1.5 |
| L | 0.00 | 0.50 | 0.50 | 445 | 2.6 |
| 4 | 0.00 | 0.25 | 0.75 | 488 | 4.7 |
| *ADEBAC: ADBAC is a 50 wt% mix of the two quaternary materials | | | | | |

### Example 2

Other carboxylic acids can be used, either alone or in mixtures which each other or with Lactic Acid. One useful mixture is a 50:50 wt% mix of citric and malonic acids.

**TABLE 5**

| Example | DDAC | ADEBAC: ADBAC | 1:1 citric acid: malonic acid | High soil P. *aeruginosa* 5 mins, 20°C MBC (ppm) | Synergy gain (3 way) |
|---|---|---|---|---|---|
| A | 0.333 | 0.667 | 0.00 | 155 | 2.6 |
| F | 0.00 | 0.00 | 1.00 | 248 | 1.0 |
| J | 0.00 | 1.00 | 0.00 | 581 | 1.0 |
| M | 0.00 | 0.00 | 1.00 | 3000 | 1.0 |
| 5 | 0.25 | 0.50 | 0.25 | 230 | 3.1 |

### Claims

1.  A method for adding a biocidal composition to a laundry washing process comprising the steps of adding a dose of from 4 to 40 ml of a liquid composition to the rinse aid dispenser of an automatic washing machine, optionally together with a dose of liquid fabric conditioner in the same dispensing compartment, the composition comprising one or more water soluble quaternary ammonium compounds and one or more water soluble organic hydroxy acids; wherein the weight ratio of the water soluble organic hydroxy acids to the quaternary ammonium compounds lies in the range from 95:5 to 52:48; wherein the acid in the composition comprises L-Lactic Acid; and wherein there are two water soluble quaternary ammonium compounds in the composition, one being ADEBAC (C12-C14-alkyl [(ethylphenyl) methyl] dimethyl ammonium chloride), and the other ADBAC (Benzyl C12-16 alkyl dimethyl ammonium chloride ).

2. A method according to any preceding claim wherein the weight ratio of water soluble organic hydroxy acids to water soluble quaternary ammonium compounds in the composition lies in the range 75:25 to 54:46.

3. A method according to claim 2 wherein the composition further comprises DDAC(didecyldimethyl ammonium chloride).

4. A method according to any preceding claim wherein the composition comprises a carrier solvent and a mixture of:

(i) three quaternary ammonium compounds consisting of:

    a) (ADBAC) Benzyl C12-16 alkyl dimethyl ammonium chloride,
    b) (DDAC) didecyldimethyl ammonium chloride, and
    c) (ADEBAC) C12-C14-alkyl [(ethylphenyl) methyl] dimethyl ammonium chloride, and

(ii) L-Lactic Acid,

wherein the weight ratio of L-Lactic Acid (ii) to quaternary ammonium compounds (i) lies in the range from 95:5 to 52:48.

5. A method according to any preceding claim wherein the dose is from 5 to 25 ml.

**Patentansprüche**

1. Verfahren zum Zugeben einer bioziden Zusammensetzung zu einem Wäschewaschprozess, umfassend die Schritte des Zugebens einer Dosis von 4 bis 40 ml einer flüssigen Zusammensetzung zu dem Klarspülerspender einer automatischen Waschmaschine, optional zusammen mit einer Dosis eines flüssigen Textilkonditionierers in demselben Spenderfach, wobei die Zusammensetzung eine oder mehrere wasserlösliche quaternäre Ammoniumverbindungen und eine oder mehrere wasserlösliche organische Hydroxysäuren umfasst, wobei das Gewichtsverhältnis der wasserlöslichen organischen Hydroxyverbindungen zu den quaternären Ammoniumverbindungen in dem Bereich von 95:5 bis 52:48 liegt, wobei die Säure in der Zusammensetzung L-Milchsäure umfasst und wobei zwei wasserlösliche quaternäre Ammoniumverbindungen in der Zusammensetzung vorliegen, wobei die eine ADEBAC ($C_{12}$-$C_{14}$-Alkyl[(ethylphenyl)methyl]dimethylammoniumchlorid) und die andere ADBAC (Benzyl-$C_{12\text{-}16}$-alkyldimethylammoniumchlorid) ist.

2. Verfahren nach einem vorhergehenden Anspruch, wobei das Gewichtsverhältnis der wasserlöslichen organischen Hydroxysäuren zu den wasserlöslichen quaternärem Ammoniumverbindungen in der Zusammensetzung in dem Bereich von 75:25 bis 54:46 liegt.

3. Verfahren nach Anspruch 2, wobei die Zusammensetzung ferner DDAC (Didecyldimethylammoniumchlorid) umfasst.

4. Verfahren nach irgendeinem vorhergehenden Anspruch, wobei die Zusammensetzung ein Trägerlösungsmittel und eine Mischung umfasst von:

(i) drei quaternären Ammoniumverbindungen, bestehend aus:

    a) (ADBAC) Benzyl-$C_{12\text{-}16}$-alkyldimethylammoniumchlorid,
    b) (DDAC) Didecyldimethylammoniumchlorid und
    c) (ADEBAC) $C_{12}$-$C_{14}$-Alkyl[(ethylphenyl)methyl]dimethylammoniumchlorid, und

(ii) L-Milchsäure,

wobei das Gewichtsverhältnis von L-Milchsäure (ii) zu den quaternären Ammoniumverbindungen (i) in dem Bereich von 95:5 bis 52:48 liegt.

**5.** Verfahren nach irgendeinem vorhergehenden Anspruch, wobei die Dosis 5 bis 25 ml beträgt.


**Revendications**

**1.** Procédé pour l'addition d'une composition biocide à un procédé de lavage de linge comprenant les étapes d'addition d'une dose de 4 à 40 ml d'une composition liquide au distributeur d'aide au rinçage d'un lave-linge automatique, éventuellement avec une dose d'assouplissant de textile liquide dans le même compartiment de distribution, la composition comprenant un ou plusieurs composés d'ammonium quaternaire solubles dans l'eau et un ou plusieurs hydroxy-acides organiques solubles dans l'eau ; dans lequel le rapport en masse des hydroxy-acides organiques solubles dans l'eau aux composés d'ammonium quaternaire se trouve dans l'intervalle de 95:5 à 52:48 ; dans lequel l'acide dans la composition comprend de l'acide L-lactique ; et dans lequel il y a deux composés d'ammonium quaternaire solubles dans l'eau dans la composition, un étant ADEBAC (chlorure de (alkyle en C12-C14)[(éthylphényl)méthyl]diméthylammonium), et l'autre ADBAC (chlorure de benzyl(alkyle en C12-16) diméthylammonium).

**2.** Procédé selon l'une quelconque des revendications précédentes, dans lequel le rapport en masse d'hydroxy-acides organiques solubles dans l'eau aux composés d'ammonium quaternaire solubles dans l'eau dans la composition se trouve dans l'intervalle de 75:25 à 54:46.

**3.** Procédé selon la revendication 2, dans lequel la composition comprend de plus DDAC(chlorure de didécyldiméthylammonium).

**4.** Procédé selon l'une quelconque des revendications précédentes, dans lequel la composition comprend un solvant porteur et un mélange de :

(i) trois composés d'ammonium quaternaire consistant en :

a) (ADBAC) chlorure de benzyl(alkyle en C12-16)diméthylammonium,
b) (DDAC) chlorure de didécyldiméthylammonium, et
c) (ADEBAC) chlorure de (alkyle en C12-C14)[(éthylphényl)-méthyl]diméthylammonium,
et

(ii) acide L-lactique,

dans lequel le rapport en masse d'acide L-lactique (ii) aux composés d'ammonium quaternaire (i) se trouve dans l'intervalle de 95:5 à 52:48.

**5.** Procédé selon l'une quelconque des revendications précédentes, dans lequel la dose est de 5 à 25 ml.

## Figure 1

## REFERENCES CITED IN THE DESCRIPTION

### Patent documents cited in the description

- WO 2009125305 A2
- WO 2016040230 A1
- WO 2013156371 A
- WO 200100777 A
- WO 200181519 A
- US 3932655 A
- US 5861371 A
- WO 2010027863 A
- EP 1454638 A
- WO 2013067150 A
- WO 2013098547 A

### Non-patent literature cited in the description

- **BOOMSMA et al.** *SOFW Journal,* 2015, vol. 141 (10), 2-6
- **LU et al.** *J. Food Protection,* 2011, vol. 74 (6), 893-8
- *CHEMICAL ABSTRACTS,* 85409-23-0
- *CHEMICAL ABSTRACTS,* 68424-85-1
- *CHEMICAL ABSTRACTS,* 7173-51-5